# FASCICULE DE BREVET EUROPEEN

(11) **EP 3 068 659 B1**
(45) Date de publication et mention de la délivrance du brevet: **06.09.2017**
(21) Numéro de dépôt: 14809475.8
(22) Date de dépôt: 07.11.2014
(51) Int. Cl.: B60L 11/18, H02J 7/00, H02J 7/02

(54) **DISPOSITIF ET PROCEDE DE RECHARGE D'UN STOCKEUR D'ENERGIE ELECTRIQUE D'UN VEHICULE AUTOMOBILE**
VORRICHTUNG UND VERFAHREN ZUM WIEDERAUFLADEN EINES STROMSPEICHERS EINES KRAFTFAHRZEUGS
DEVICE AND METHOD FOR RECHARGING AN ELECTRICAL ENERGY STORE OF A MOTOR VEHICLE

(30) Priorité: 12.11.2013 FR 1361017
(43) Date de publication de la demande: 21.09.2016
(73) Titulaire: PSA Automobiles SA, 78300 Poissy (FR)
(72) Inventeur: BOUDARD, Emmanuel, 78960 Voisins Le Bretonneux (FR)
(74) Mandataire: Rosenberg, Muriel Sylvie
(86) Numéro de dépôt international: PCT/FR2014/052863
(87) Numéro de publication internationale: WO 2015/071581

(56) Documents cités:
- EP-A1- 1 340 908
- EP-A1- 1 595 748
- WO-A2-03/105330
- JP-A- 2004 328 988

## Description

La présente invention se rapporte à un dispositif et à un procédé de recharge d'un stockeur d'énergie électrique d'un véhicule automobile, ainsi qu'à un véhicule automobile muni d'un tel dispositif. Le document EP 1 595 748 A1 divulgue un tel dispositif. L'invention appartient au domaine des véhicules dits « plug-in », tels que les véhicules électriques ou hybrides rechargeables.

On appelle véhicule « plug-in » un véhicule comportant au moins un stockeur d'énergie électrique, aussi appelé batterie dans la suite du document, pouvant être rechargé via un raccordement à un réseau de distribution d'électricité extérieur à ce véhicule. Ce réseau de distribution est par exemple un réseau électrique domestique fournissant un courant alternatif sous une tension électrique de 110 V ou de 230 V.

Habituellement, une batterie comporte des cellules électrochimiques comprenant tous types de technologies, ou encore des condensateurs (ou capacités électriques). Ces cellules ou condensateurs sont regroupés en un ou plusieurs modules et sont connectés entre eux en série ou en parallèle.

Les véhicules plug-in comportent généralement deux batteries : une batterie de servitude et une batterie de traction.

La batterie de servitude permet l'alimentation des organes du véhicule consommateurs d'électricité de faible puissance, généralement de l'ordre de quelques centaines de watts.Elle délivre un courant continu et la tension à ses bornes est relativement basse, usuellement 12 V.

La batterie de traction permet d'alimenter une machine électrique pour entraîner des roues motrices du véhicule. Cette batterie délivre un courant continu sous une tension plus élevée, généralement comprise entre 36 et 400 V.

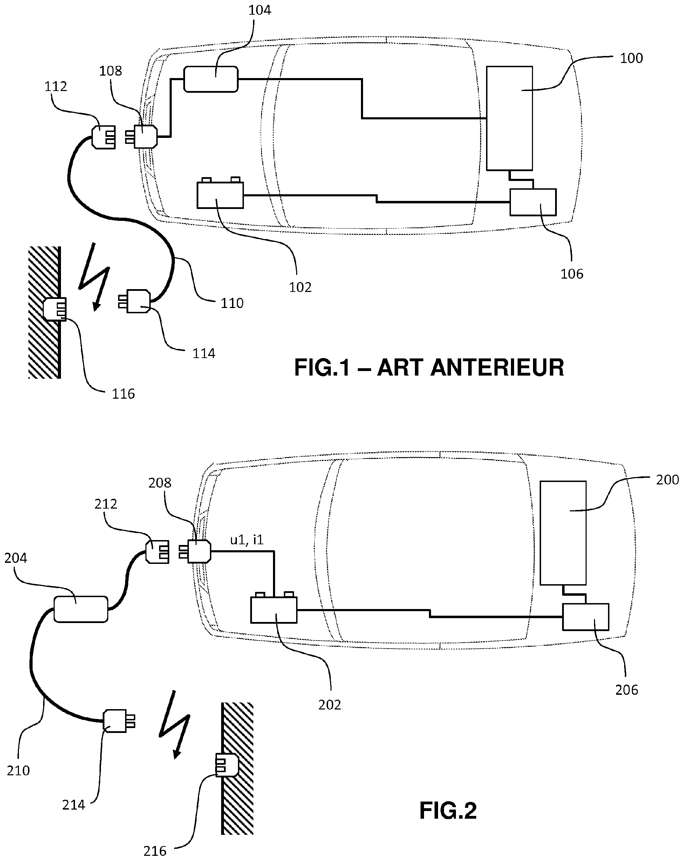

La figure 1 illustre un dispositif, connu de l'art antérieur, pour la recharge d'un véhicule plug-in.

Un réseau de distribution électrique, extérieur au véhicule, comporte une prise électrique 116. Par prise électrique, on entend un connecteur mâle ou femelle permettant de raccorder un ou plusieurs appareils consommateurs de courant électrique à une source de tension électrique.

La prise électrique 116 peut être raccordée à une prise électrique 108 du véhicule au moyen d'un câble de recharge 110. Le câble de recharge 110 est muni à ses extrémités de prises électriques 112 et 114.

Le véhicule comporte en outre un premier stockeur d'énergie électrique 100, appelé batterie de traction, et un second stockeur d'énergie électrique 102, appelé batterie de servitude.

Un premier convertisseur de tension 106 est relié électriquement à la batterie de traction 100 et à la batterie de servitude 102. Il permet d'adapter la tension et d'échanger de l'énergie électrique entre la batterie de traction 100 et la batterie de servitude 102.

Un second convertisseur de tension 104 est connecté à la prise 108 pour adapter la tension et échanger de l'énergie électrique entre cette prise 108 et la batterie de traction 100.

Le convertisseur de tension 104 est dimensionné pour recharger les batteries du véhicule avec une puissance nominale égale à 3600 W. Par puissance nominale on entend la puissance pouvant être délivrée par le convertisseur 104 en régime permanent. Un tel dispositif de recharge présente par conséquent un coût très élevé.

En outre, le dispositif de recharge décrit ci-dessus présente une masse et un volume qui rendent difficile l'intégration d'un tel dispositif dans le véhicule.

L'invention a pour but de remédier aux inconvénients précités de l'art antérieur.

Dans ce but, la présente invention propose un dispositif de recharge d'un véhicule automobile, ce dispositif comportant :
- un moyen de connexion électrique, interface utilisateur pour le raccordement à un réseau de distribution électrique extérieur au véhicule ;
- un premier stockeur d'énergie électrique présentant à ses bornes une tension maximale supérieure à 50 V ;
- un premier convertisseur de tension adapté à transférer de l'énergie entre le moyen de connexion et le premier stockeur ;

ce dispositif étant remarquable en ce que moyen de connexion présente à ses bornes une puissance nominale inférieure à 2300 Watt.

Ainsi, le dispositif de recharge selon l'invention présente un coût réduit.

Selon une caractéristique particulière, le moyen de connexion présente à ses bornes une puissance nominale inférieure à 1000 Watt.

Selon une caractéristique particulière, cette puissance nominale est inférieure à 250 W.

Selon une caractéristique particulière, le dispositif comporte en outre un second stockeur d'énergie électrique et un second convertisseur de tension pour transférer de l'énergie au second stockeur.

L'invention permet ainsi de recharger, à moindre coût, un second stockeur d'énergie électrique.

Dans un premier mode particulier de réalisation, le second convertisseur comporte un moyen de protection adapté à limiter l'intensité du courant circulant dans le moyen de connexion à une valeur inférieure à 32 A.

Dans le premier mode particulier de réalisation, selon une caractéristique particulière, le second convertisseur est adapté à transférer de l'énergie au moyen de connexion.

Dans un autre mode particulier de réalisation, le second convertisseur est adapté à transférer de l'énergie entre le moyen de connexion et le second stockeur.

Selon une caractéristique particulière, le premier convertisseur de tension présente une puissance nominale inférieure à 150 W.

L'invention a également pour objet un procédé de recharge d'un véhicule automobile, ce procédé étant remarquable en ce qu'il comporte des étapes adaptées à mettre en oeuvre un dispositif tel que brièvement décrit plus haut.

Les avantages du procédé sont similaires à ceux du dispositif et ne sont pas rappelés ici.

Dans le même but, l'invention a aussi pour objet un véhicule automobile comportant un dispositif de recharge tel que brièvement décrit plus haut.

L'invention sera mieux comprise et d'autres aspects et avantages apparaîtront plus clairement à la lecture de la description qui suit de modes particuliers de réalisation, donnés à titre d'exemple nullement limitatifs et en référence aux dessins qui l'accompagnent, dans lesquels :
- la figure 1, déjà décrite, est un schéma d'un dispositif classique de recharge d'un véhicule automobile ;
- la figure 2 est un schéma d'un dispositif de recharge d'un véhicule automobile, dans un premier mode particulier de réalisation de l'invention ; et
- la figure 3 est un schéma d'un dispositif de recharge d'un véhicule automobile, dans une variante de réalisation de l'invention.

La figure 2 illustre, dans un premier mode particulier de réalisation de l'invention, un dispositif de recharge d'un véhicule automobile.

Ce dispositif comporte une prise de recharge 208 et un premier stockeur d'énergie électrique 200, dit batterie de traction.

La prise de recharge 208 permet de connecter le véhicule à un réseau de distribution électrique extérieur au véhicule.

La batterie de traction 200 permet d'alimenter une machine électrique (non représentée) par l'intermédiaire d'un onduleur (non représenté) pour entraîner des roues motrices (non représentées) du véhicule. Cette batterie de traction 200, par exemple de technologie lithium-ion, délivre un courant continu. La tension aux bornes de la batterie de traction 200 est supérieure à 36 V, généralement inférieure à 400 V et est par exemple comprise dans une plage de fonctionnement de 180 à 260 V. La tension maximale de la batterie de traction 200 est supérieure à 50 V.

Un second stockeur d'énergie électrique 202, dit batterie de servitude, est installé dans le véhicule pour l'alimentation d'organes électriques du véhicule consommant une faible puissance. Par exemple, la batterie de servitude 202 est de type L3 / 76 A.h (Ampère.heure). Le niveau d'énergie dans la batterie de servitude 202 peut être surveillé par un estimateur de charge (non illustré). La tension aux bornes de la batterie de servitude 202 varie selon les conditions de roulage du véhicule et est généralement comprise entre 6 et 16 V. Elle est par exemple égale à 12,3 V lorsque la batterie 202 n'est pas sollicitée et est généralement égale à 14,4 V lorsque le véhicule se déplace.

Avantageusement, la tension aux bornes de la batterie de servitude 202 est limitée par le second convertisseur 204 à une valeur maximale de 16 V pour éviter d'endommager les composants électriques des organes alimentés par cette batterie. Par ailleurs, une tension supérieure à 16 V présenterait un risque d'endommagement et d'accélération du vieillissement de cette batterie 202.

La prise 208 est liée électriquement à la batterie de servitude 202 au moyen d'un câble électrique. La tension aux bornes de la batterie de servitude 202 est donc égale, lors de la recharge, à la tension aux bornes de la batterie prise 208, aux pertes électriques en ligne près dans ce câble.

Un premier convertisseur de tension 206 est installé dans le véhicule pour relier électriquement la batterie de servitude 202 et la batterie de traction 200. Le premier convertisseur 206 permet de transférer de l'énergie entre la batterie de servitude 202 et la batterie de traction 200 et d'adapter la tension entre ces deux batteries.

Le premier convertisseur 206 permet également de transférer de l'énergie entre la prise de recharge 208 et la batterie de traction 200.

La batterie de traction 200 et le premier convertisseur 206 peuvent comporter chacun un calculateur électronique de contrôle.

Par exemple, le calculateur de contrôle du premier convertisseur 206 surveille la tension et/ou le courant aux bornes de ce convertisseur et le calculateur de contrôle de la batterie de traction 200 surveille la tension et/ou le courant aux bornes de cette batterie.

Le réseau de distribution électrique, extérieur au véhicule, comporte une prise de raccordement 216. Ce réseau de distribution est par exemple un réseau domestique délivrant un courant alternatif de 16 A (Ampère) au maximum, sous une tension de 110 V ou de 230 V.

La prise 216 peut être raccordée à la prise de recharge 208, interface utilisateur de raccordement du véhicule au réseau de distribution électrique, au moyen d'un câble de recharge 210. Le câble de recharge 210 est muni d'un second convertisseur 204 de tension et comporte à ses extrémités des prises électriques 212 et 214.

Le second convertisseur 204 de tension permet de transférer de l'énergie entre la prise 216 du réseau de distribution électrique et la batterie de servitude 202, par l'intermédiaire de la prise de recharge 208.

Pour la recharge de la batterie de traction 200 et de la batterie de servitude 202, le câble de recharge 210 est connecté à la prise 216 du réseau de distribution électrique et à la prise 208 du véhicule.

Le second convertisseur 204 peut comporter un moyen de protection, logiciel et/ou matériel, pour limiter la tension à une valeur inférieure à 16 V aux bornes de la prise 208.

Le second convertisseur 204 de tension délivre aux bornes de la batterie de servitude 202 un courant continu i1, sous une tension u1 dont la valeur maximale est strictement inférieure à 50 V.

Afin d'éviter la projection de métal lors d'un débranchement sous charge, le moyen de protection du second convertisseur 204 peut limiter l'intensité du courant i1 à une valeur inférieure à 32 A.

Le courant i1 délivré par le convertisseur 204 permet de recharger la batterie de servitude 202 et de fournir au premier convertisseur 206 un courant pour la recharge de la batterie de traction 200.

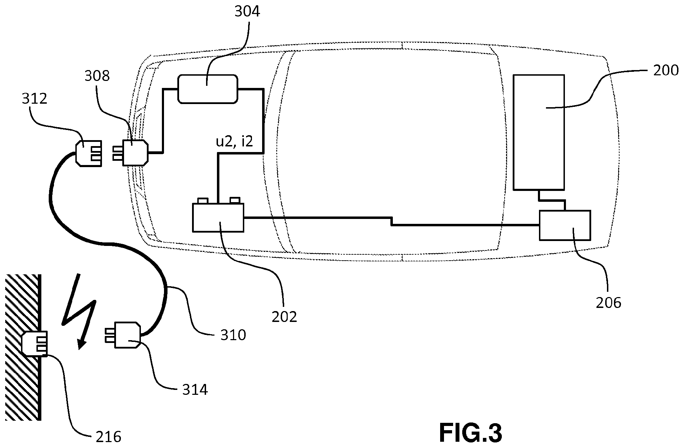

La figure 3 illustre, dans un autre mode particulier de réalisation de l'invention, un dispositif de recharge d'un véhicule automobile.

Ce dispositif comporte une batterie de traction 200, une batterie de servitude 202 et un premier convertisseur de tension 206 identiques à ceux décrits en liaison avec la figure 2.

Une prise de recharge 308 permet de connecter le véhicule à un réseau de distribution électrique extérieur au véhicule.

Un second convertisseur 304 de tension est installé dans le véhicule pour relier électriquement la prise de recharge 308 et la batterie de servitude 202. Le second convertisseur 304 permet ainsi de transférer de l'énergie entre le réseau de distribution électrique et la batterie de servitude 202 et d'adapter la tension entre ces deux éléments.

La prise 308 peut également alimenter en courant d'autres organes électriques non illustrés.

Ainsi, par l'intermédiaire du second convertisseur 304, le premier convertisseur 206 permet de transférer de l'énergie entre la prise de recharge 308 et la batterie de traction 200.

La prise 216 du réseau de distribution peut être raccordée à la prise de recharge 308, interface utilisateur pour le raccordement du véhicule au réseau de distribution électrique, au moyen d'un câble de recharge 310. Le câble de recharge 310 comporte à ses extrémités des prises électriques 312 et 314.

Pour la recharge de la batterie de traction 200 et de la batterie de servitude 202, le câble de recharge 310 est connecté à la prise 216 du réseau de distribution électrique et à la prise 308 du véhicule.

Le second convertisseur 304 de tension permet de délivrer aux bornes de la batterie de servitude 202 un courant continu i2, sous une tension u2 dont la valeur maximale est inférieure à 50 V.

Le courant i2 délivré par le convertisseur 304 au niveau de la batterie de servitude 202 permet de recharger cette batterie et de fournir au premier convertisseur 206 un courant pour la recharge de la batterie de traction 200.

Les limitations de tension et de courant qui suivent sont applicables aux dispositifs de recharge présentés sur les figures 2 et 3.

Pour éviter d'endommager la batterie de servitude 202, on peut limiter la tension u1 ou u2 aux bornes de la batterie de servitude 202 à une valeur de 16 V. Par exemple, la tension u1 ou u2 est comprise entre 9 V et 15 V.

Dans le cas particulier où la batterie de servitude 202 est déchargée, la tension u1 ou u2 est plus faible. Elle est par exemple comprise entre 6 et 10 V.

En variante, le second convertisseur 204 ou 304 peut délivrer à la prise 208 ou 308 un courant alternatif, sous une tension strictement inférieure à 50 V.

Pour éviter d'endommager la batterie de servitude 202, les courants i1 et i2 dépendent de la puissance de recharge du véhicule et ne doivent pas dépasser 20% à 25% de l'ampérage capacitaire de cette batterie. Par exemple, pour une batterie de servitude de type L3 / 76 A.h, on peut intégrer au second convertisseur 204 ou 304, une limitation du courant i1 ou i2 à 17,3 A.

Les limitations de puissance qui suivent sont applicables aux dispositifs de recharge présentés sur les figures 2 et 3.

Conformément à l'invention, la puissance nominale appliquée aux bornes de la prise 208 ou 308, c'est-à-dire la puissance maximale pouvant être délivrée au niveau de la prise 208 ou 308 en régime permanent, est inférieure à 2300 W.

Avantageusement, une puissance nominale inférieure à 1000 W permet de recharger en 2 à 6 heures (par exemple la nuit) les batteries 200 et 202 du véhicule. L'énergie utile des batteries 200 et 202 est généralement comprise entre 50 et 3000 W.h (Watt.heure).

Avantageusement, pour la recharge de batteries ayant une énergie utile faible, une puissance nominale inférieure à 250 W peut être suffisante.

Pour répondre à d'autres besoins électriques du véhicule, cette puissance nominale peut dans certains cas être comprise entre 250 et 2300 W.

Une partie de la puissance de recharge étant utilisée pour recharger la batterie de servitude 202, dans certains cas la puissance nominale du premier convertisseur 206 peut être limitée à 150 W, ce qui est suffisant pour la recharge de la batterie de traction 200.

La description qui suit d'un procédé de recharge conforme à l'invention est identique pour les dispositifs de recharge présentés sur les figures 2 et 3.

Lorsque l'utilisateur connecte le câble 210 ou 310 pour la recharge du véhicule, l'absence de contact au niveau de la clé de démarrage du véhicule est vérifiée, puis le premier convertisseur 206 de tension est activé.

Lorsque la batterie de traction 200 et/ou le premier convertisseur 206 comportent des calculateurs, ces derniers sont actifs durant la recharge.

L'alimentation des autres calculateurs du véhicule est coupée pour limiter les risques liés au vieillissement de leurs composants électroniques. En effet, ces composants ont une durée de vie en fonctionnement de l'ordre de 10 000 heures, inférieure à la durée cumulée des recharges du véhicule, de l'ordre de 50 000 heures.

L'alimentation de l'onduleur et par conséquent de la machine électrique de traction, est coupée pour éviter le déplacement du véhicule durant la recharge.

La durée de recharge est définie pour que le niveau d'énergie maximum de la batterie de servitude 202 ne soit pas durablement dépassé durant la recharge. Par exemple, pour une batterie de servitude de type L3 / 76 A.h, une durée de recharge égale à 6 heures est bien adaptée.

Lors de la recharge, les convertisseurs 204, 304 et 206, de même que les batteries 200 et 202, fonctionnent avec une puissance limitée et ne nécessitent donc pas d'être refroidis par un système de refroidissement actif, consommateur de puissance.

Par exemple, en considérant une puissance de 150 W dans le premier convertisseur 206 de tension et un rendement de 90%, les pertes électriques sont de l'ordre de 15 W. Ces pertes sont facilement évacuées sous forme de chaleur dans l'air ambiant, par convection naturelle du convertisseur 206.

Pour limiter l'échauffement des convertisseurs 204, 304 et 206, un système de déclassement (en anglais « derating ») peut être intégré à ces convertisseurs. Ce système de « derating » limite le courant dans les convertisseurs lorsque des seuils de température sont atteints.

Ainsi, un dispositif ou un procédé de recharge d'un véhicule automobile suivant l'invention présente un coût réduit.

## Revendications

1. Dispositif de recharge d'un véhicule automobile, ledit dispositif comportant :
- un moyen (208 ; 308) de connexion électrique, interface pour le raccordement à un réseau de distribution électrique extérieur audit véhicule ;
- un premier stockeur d'énergie électrique (200) présentant à ses bornes une tension maximale supérieure à 50 V ;
- un premier convertisseur (206) de tension adapté à transférer de l'énergie entre ledit moyen (208 ; 308) de connexion et ledit premier stockeur (200) ;
ledit dispositif étant **caractérisé en ce qu'**il comporte en outre un second stockeur d'énergie électrique (202) et un second convertisseur (204 ; 304) pour transférer de l'énergie audit second stockeur (202), ledit second convertisseur (204 ; 304) appliquant aux bornes dudit moyen (208 ; 308) de connexion une puissance nominale inférieure à 2300 W.

2. Dispositif selon la revendication 1, **caractérisé en ce que** ladite puissance nominale est inférieure à 1000 W.

3. Dispositif selon la revendication 1 ou 2, **caractérisé en ce que** ladite puissance nominale est inférieure à 250 W.

4. Dispositif selon l'une quelconque des revendications précédentes, **caractérisé en ce que** ledit second convertisseur (204) comporte un moyen de protection adapté à limiter l'intensité du courant circulant dans ledit moyen (208) de connexion à une valeur inférieure à 32 A.

5. Dispositif selon l'une quelconque des revendications précédentes, **caractérisé en ce que** ledit second convertisseur (204) est adapté à transférer de l'énergie audit moyen (208) de connexion.

6. Dispositif l'une quelconque des revendications précédentes, **caractérisé en ce que** ledit second convertisseur (304) est adapté à transférer de l'énergie entre ledit moyen (308) de connexion et ledit second stockeur (202).

7. Dispositif selon l'une quelconque des revendications précédentes, **caractérisé en ce que** la puissance nominale dudit premier convertisseur (206) de tension est inférieure à 150 W.

8. Véhicule automobile **caractérisé en ce qu'**il comporte un dispositif de recharge selon l'une quelconque des revendications 1 à 7.

## Patentansprüche

1. Vorrichtung zum Aufladen eines Kraftfahrzeugs, wobei die Vorrichtung Folgendes umfasst:
- ein Mittel (208; 308) zum elektrischen Anschließen, Schnittstelle zum Anschließen an ein externes Stromnetz an das Fahrzeug;
- einen ersten Stromspeicher (200), der an seinen Klemmen eine maximale Spannung größer als 50 V aufweist;
- einen ersten Spannungswandler (206), der angepasst ist, um Energie zwischen dem Mittel (208; 308) zum Anschließen und dem ersten Speicher (200) zu übertragen;
Vorrichtung **dadurch gekennzeichnet, dass** sie außerdem einen zweiten Stromspeicher (202) und einen zweiten Wandler (204; 304) umfasst, um Energie zu dem zweiten Speicher (202) zu übertragen, wobei der zweite Wandler (204; 304) an den Klemmen des Anschlussmittels (208; 308) eine Nennspannung kleiner als 2300 W anlegt.

2. Vorrichtung nach Anspruch 1, **dadurch gekennzeichnet, dass** die Nennleistung kleiner ist als 1000 W.

3. Vorrichtung nach Anspruch 1 oder 2, **dadurch gekennzeichnet, dass** die Nennleistung kleiner ist als 250 W.

4. Vorrichtung nach einem der vorhergehenden Ansprüche, **dadurch gekennzeichnet, dass** der zweite Wandler (204) ein Schutzmittel umfasst, das angepasst ist, um die Stärke des Stroms, der in dem Anschlussmittel (208) zirkuliert, auf einen Wert kleiner als 32 A zu begrenzen.

5. Vorrichtung nach einem der vorhergehenden Ansprüche, **dadurch gekennzeichnet, dass** der zweite Wandler (204) angepasst ist, um Energie zu dem Anschlussmittel (208) zu übertragen.

6. Vorrichtung nach einem der vorhergehenden Ansprüche, **dadurch gekennzeichnet, dass** der zweite Wandler (304) angepasst ist, um Energie zwischen dem Anschlussmittel (308) und dem zweiten Speicher (202) zu übertragen.

7. Vorrichtung nach einem der vorhergehenden Ansprüche, **dadurch gekennzeichnet, dass** die Nennleistung des ersten Spannungswandlers (206) kleiner ist als 150 Watt.

8. Kraftfahrzeug, **dadurch gekennzeichnet, dass** es eine Wiederaufladevorrichtung nach einem der Ansprüche 1 bis 7 umfasst.

## Claims

1. A device for recharging a motor vehicle, said device comprising:
- an electrical connection means (208; 308), interface for connecting to an electrical distribution network outside said vehicle;
- a first electrical energy store (200) having, at its terminals, a maximum voltage greater than 50 V;
- a first voltage converter (206) suited to transferring energy between said connection means (208; 308) and said first store (200);
said device being **characterized in that** it further comprises a second electrical energy store (202) and a second converter (204; 304) for transferring energy to said second store (202), said second converter (204; 304) applying to the terminals of said connection means (208; 308) a nominal power lower than 2300 W.

2. The device according to Claim 1, **characterized in that** said nominal power is lower than 1000 W.

3. The device according to Claim 1 or 2, **characterized in that** said nominal power is lower than 250 W.

4. The device according to any one of the preceding claims, **characterized in that** said second converter (204) comprises a protection means suited to limit the intensity of the current circulating in said connection means (208) to a value lower than 32 A.

5. The device according to any one of the preceding claims, **characterized in that** said second converter (204) is suited to transfer energy to said connection means (208).

6. The device according to any one of the preceding claims, **characterized in that** said second converter (304) is suited to transfer energy between said connection means (308) and said second store (202).

7. The device according to any one of the preceding claims, **characterized in that** the nominal power of said first voltage converter (206) is lower than 150 W.

8. A motor vehicle, **characterized in that** it comprises a recharging device according to any one of Claims 1 to 7.
